# EUROPÄISCHE PATENTSCHRIFT

(11) **EP 2 994 424 B1**
(45) Veröffentlichungstag und Bekanntmachung des Hinweises auf die Patenterteilung: **11.07.2018**
(21) Anmeldenummer: 14721367.2
(22) Anmeldetag: 02.05.2014
(51) Int. Cl.: C01G 53/00, H01M 4/485, H01M 4/505, H01M 4/525

(54) **SPHÄRISCHE PARTIKEL, IHRE HERSTELLUNG UND VERWENDUNG**
SPHERICAL PARTICLES, THEIR PREPARATION AND USE
PARTICULE SPHÉRIQUE, SA FABRICATION ET SON UTILISATION

(30) Priorität: 08.05.2013 EP 13167005
(43) Veröffentlichungstag der Anmeldung: 16.03.2016
(73) Patentinhaber: BASF SE, 67056 Ludwigshafen am Rhein (DE)
(72) Erfinder: SCHROEDLE, Simon, Westfield 07090 (US); SCHULZ-DOBRICK, Martin, 67056 Ludwigshafen (DE)
(74) Vertreter: BASF IP Association
(86) Internationale Anmeldenummer: PCT/EP2014/058966
(87) Internationale Veröffentlichungsnummer: WO 2014/180743

(56) Entgegenhaltungen:
- WO-A1-2007/114557
- WO-A1-2008/092568
- US-B1- 6 274 273
- YANG-KOOK SUN ET AL: "A novel concentration-gradient Li[Ni0.83Co0.07Mn0.10]O2 cathode material for high-energy lithium-ion batteries", JOURNAL OF MATERIALS CHEMISTRY, Bd. 21, Nr. 27, 1. Januar 2011 (2011-01-01), Seite 10108, XP055092893, ISSN: 0959-9428, DOI: 10.1039/c0jm04242k

## Beschreibung

Die vorliegende Erfindung betrifft sphärische Partikel von Übergangsmetallcarbonaten, Übergangsmetallhydroxiden oder Übergangsmetallcarbonathydroxiden, gemäß Anspruch 1, die Kationen von mindestens zwei Übergangsmetallen aufweisen, gewählt aus Nickel, Kobalt, Mangan, Titan, Vanadium, Chrom und Eisen, dadurch gekennzeichnet, dass die Konzentration der Kationen von mindestens einem der Übergangsmetalle, aufgetragen über den Radius des betreffenden Partikels, mindestens einen relativen Extremwert aufweist, der weder im Zentrum noch am Rand des betreffenden Partikels liegt.

Weiterhin betrifft die vorliegende Erfindung ein Verfahren zur Herstellung der erfindungsgemäßen sphärischen Partikel. Weiterhin betrifft die vorliegende Erfindung lithiierte Übergangsmetallmischoxide, die man mit Hilfe von erfindungsgemäßen Partikeln herstellen kann, und die Verwendung von so hergestellten lithiierten Übergangsmetallmischoxiden.

Energie zu speichern ist schon seit langer Zeit ein Gegenstand wachsenden Interesses. Elektrochemische Zellen, beispielsweise Batterien oder Akkumulatoren, können zur Speicherung von elektrischer Energie dienen. Besonderes Interesse genießen seit neuerer Zeit die sogenannten Lithium-Ionen-Batterien. Sie sind in einigen technischen Aspekten den herkömmlichen Batterien überlegen. So kann man mit ihnen Spannungen erzeugen, die mit Batterien auf der Grundlage von wässrigen Elektrolyten nicht zugänglich sind.

Bei Lithium-Ionen-Batterien spielen die Materialien, aus denen die Elektroden gemacht werden, und dabei insbesondere das Material, aus dem die Kathode gemacht wird, eine wichtige Rolle. In vielen Fällen verwendet man als aktives Material (auch "Aktivmaterial" genannt) Lithium-haltige Übergangmetallmischoxide, insbesondere Lithium-haltige Nickel-Kobalt-Mangan-Oxide. Probleme ergeben sich bei vielen Batterien durch mangelnde Zyklenbeständigkeit, insbesondere bei erhöhter Temperatur, beispielsweise bei 35 bis 60°C, die Lebensdauer und die Sicherheit, insbesondere gegen Kurzschlüsse, bei mechanischer Beschädigung der Batterie oder bei übermäßiger thermischer Belastung, die jeweils noch zu verbessern sind. Ein weiteres Problem stellt die Gasentwicklung dar, die insbesondere bei Nickel-reichen Kathodenmaterialien zu einem raschen Versagen der Batterie führen kann. Ein weiteres Problem, welches noch nicht abschließend gelöst ist, ist die Strombelastbarbeit (Ratenfestigkeit).

Einige Autoren schlagen vor, derartige Probleme zu lösen, indem man so genannte Gradientenmaterialien oder Kern-Schale-Materialien macht. So schlagen Y.-K. Sun et al. in J. Mater. Sci. 2011, 21, 10108 Materialien mit einem sehr hohen Nickel-Gehalt vor, wobei die Partikel einen Nickel-Gehalt von 83 mol-% und der Kern einen Nickel-Gehalt von 90 mol-% aufweisen.

Das Dokument KR 0752703 B2 beschreibt Li-Ni-Co-Mn Mischoxide, die aus einem Kern und einer Hülle bestehen, wobei die Konzentration von Nickel im Kern kontinuierlich über den Radius sinkt, einen relativen Minimum am Rande des Kerns erreicht, und in der Hülle einen höheren Wert im Vergleich zum Rande des Kerns aufweist. Die Konzentration von Kobalt zeigt einen relativen Maximum am Rande des Kerns, wobei kein Kobalt in der Hülle enthalten ist. Es bestand also die Aufgabe, Kathodenmaterialien für Lithium-Ionen-Batterien bereit zu stellen, die eine verbesserte Ratenfestigkeit und Zyklenbeständigkeit aufweisen, insbesondere bei höheren Betriebstemperaturen (35 bis 60°C), ohne jedoch Nachteile bezüglich der spezifischen Kapazität und damit der Energiedichte hinnehmen zu müssen. Weiterhin bestand die Aufgabe, ein Verfahren zur Herstellung von Kathodenmaterialien für Lithium-Ionen-Batterien bereit zu stellen, die eine verbesserte Ratenfestigkeit und Zyklenbeständigkeit aufweisen, insbesondere bei höheren Betriebstemperaturen (35 bis 60°C), ohne Nachteile bezüglich der Energiedichte hinnehmen zu müssen.

Es wurde gefunden, dass die Vorstufe des Kathodenmaterials einen entscheidenden Einfluss auf das Kathodenmaterial hat. Dementsprechend wurden die eingangs definierten Vorstufen gefunden, die in Form von sphärischen Partikeln anfallen und die im Rahmen der vorliegenden Erfindung auch als erfindungsgemäße sphärische Partikel oder kurz auch als erfindungsgemäße Partikel bezeichnet werden.

Erfindungsgemäße Partikel haben eine im Wesentlichen sphärische Form. Dabei sollen nicht nur solche Partikel als sphärisch mit umfasst sein, die exakt kugelförmig sind, sondern auch solche Partikel, bei denen sich maximaler und minimaler Durchmesser von mindestens 95 % (Zahlenmittel) einer repräsentativen Probe um bis maximal 25%, bevorzugt maximal 15% unterscheiden. In einer speziellen Ausführungsform der vorliegenden Erfindung sind erfindungsgemäße Partikel genau kugelförmig.

Erfindungsgemäße Partikel können einen mittleren Durchmesser (D50) im Bereich von 0,1 bis 35 µm aufweisen, bevorzugt 1 bis 30 µm, besonders bevorzugt 2 bis 20 µm, beispielsweise gemessen durch Lichtstreuung. Geeignete Geräte sind kommerziell erhältlich, beispielsweise Malvern Mastersizer.

In einer Ausführungsform der vorliegenden Erfindung haben erfindungsgemäße sphärische Partikel eine enge Partikeldurchmesserverteilung. So ist es bevorzugt, dass die folgenden Ungleichungen erfüllt sind: (D10) ≥0,5 · (D50) und (D90) ≤ 1,7 · (D50).

Erfindungsgemäße Partikel können in Form von Agglomeraten von Primärpartikeln vorliegenden. Entsprechende Primärpartikel können beispielsweise einen mittleren Durchmesser im Bereich von 50 nm bis 500 nm aufweisen.

Erfindungsgemäße Partikel sind Partikel von Übergangsmetallcarbonaten, Übergangsmetallhydroxiden oder Übergangsmetallcarbonathydroxiden. Dabei sollen unter Übergangsmetallcarbonaten auch basische Übergangsmetallcarbonate und unter Übergangsmetallhydroxiden auch Übergangsmetalloxyhydroxide mit verstanden werden, in denen die Anionen im Fall der Übergangsmetallcarbonate aber zu mehr als 50 mol-% Carbonationen sind und wobei die Anionen im Fall der Übergangsmetallhydroxide zu mehr als 50 mol-% Hydroxidionen sind.

In einer Ausführungsform sind die Anionen im Falle der Übergangsmetallcarbonate zu bis zu 99,9 mol-% Carbonationen, bevorzugt zu bis zu 99,5 mol-%, bezogen auf sämtliche Anionen in dem betreffenden erfindungsgemäßen Partikel.

In einer Ausführungsform sind die Anionen im Falle der Übergangsmetallhydroxide zu bis zu 99,9 mol-% Hydroxidionen, bevorzugt zu bis zu 99,5 mol-%, bezogen auf sämtliche Anionen in dem betreffenden erfindungsgemäßen Partikel.

In einer Ausführungsform sind die Anionen im Falle der Übergangsmetallcarbonathydroxide zu bis zu 99,9 mol-% Carbonationen und Hydroxidionen, bevorzugt zu bis zu 99,5 mol-%, beispielsweise in einem Molverhältnis im Bereich von 1 : 10 bis 10 : 1, bezogen auf sämtliche Anionen in dem betreffenden erfindungsgemäßen Partikel.

Weitere Anionen, beispielsweise mindestens 0,1 mol-%, bevorzugt mindestens 0,5 mol-%, können beispielsweise Oxidionen sein oder Gegenionen von Salzen, die als Rohmaterial zur Herstellung von erfindungsgemäßen sphärischen Partikeln eingesetzt werden, beispielsweise Sulfationen, Halogenidionen, Nitrationen oder Carboxylationen, beispielsweise Acetat.

In einer Ausführungsform der vorliegenden Erfindung enthalten erfindungsgemäße Partikel Kationen von mindestens zwei Übergangsmetallen, gewählt aus Nickel, Kobalt, Mangan, Titan, Vanadium, Chrom und Eisen, bevorzugt die Kationen von mindestens drei der vorstehend genannten Übergangsmetalle.

In einer Ausführungsform der vorliegenden Erfindung enthalten erfindungsgemäße Partikel überwiegend, beispielsweise zu mindestens 90 mol-%, bezogen auf sämtliche Kationen, die Kationen von mindestens zwei Übergangsmetallen, gewählt aus Nickel, Kobalt, Mangan, Titan, Vanadium, Chrom und Eisen, bevorzugt zu mindestens 95 mol-%, bevorzugt die Kationen von mindestens drei der vorstehend genannten Übergangsmetalle.

In einer Ausführungsform der vorliegenden Erfindung können erfindungsgemäße Partikel Kationen von Mangan, Kobalt und Nickel und gegebenenfalls von mindestens einem weiteren Übergangsmetall enthalten.

In einer Ausführungsform der vorliegenden Erfindung können erfindungsgemäße Partikel überwiegend, beispielsweise zu mindestens 90 mol-%, Kationen von Mangan, Kobalt und Nickel und gegebenenfalls von mindestens einem weiteren Übergangsmetall enthalten.

Vorzugsweise enthalten erfindungsgemäße Partikel nicht messbare oder nur sehr geringe Anteile an Lithium, beispielsweise maximal im Bereich von 0,0001 bis 0,001 Gew.-%, bezogen auf Übergangsmetallkationen.

In einer Ausführungsform der vorliegenden Erfindung liegt die Konzentration von Nickel in erfindungsgemäßen Partikeln im Bereich von 40 bis 80 mol-%, bestimmt über den Radius des betreffenden Partikels, wobei mol-% auf sämtliche Übergangsmetalle bezogen sind. Das heißt im Rahmen der vorliegenden Erfindung, dass die Konzentration von Nickelionen überall im betreffenden Partikel 40 mol-% oder höher und 80 mol-% oder weniger beträgt.

Erfindungsgemäße Partikel sind dadurch gekennzeichnet, dass die Konzentration von mindestens einem der Übergangsmetallkationen, aufgetragen über den Radius der betreffenden Partikel, mindestens einen relativen Extremwert aufweist, der weder im Zentrum noch am Rand des betreffenden Partikels liegt, beispielsweise die Konzentration von Nickelkationen oder Mangankationen. Vorzugsweise weisen die Konzentrationen von mindestens zwei verschiedenen Übergangsmetallkationen, aufgetragen über den Radius des betreffenden Partikels, jeweils mindestens einen Extremwert auf, wobei die Extremwerte vorzugsweise komplementär zueinander sind, beispielsweise weist die Konzentration von einem Übergangsmetall ein relatives Maximum auf und die Konzentration eines zweiten Übergangsmetalls ein relatives Minimum.

Dabei sollen Konzentrationsunterschiede im Bereich von ± 1 mol-% oder weniger, bezogen auf relatives Maximum und relatives Minimum, nicht als Extremwerte im Rahmen der vorliegenden Erfindung gelten.

Dabei muss sich die Konzentration der betreffenden Kationen nicht über den gesamten Radius des betreffenden Partikels ändern, sondern kann sich in einer Variante über einen Teil des Radius ändern, beispielsweise in der Hälfte, insbesondere in der äußeren Hälfte, und über die andere Hälfte sind die Konzentrationen im Wesentlichen konstant. In einer bevorzugten Ausführungsform der vorliegenden Erfindung ist bei solchen erfindungsgemäßen Partikeln, die einen mittleren Durchmesser im Bereich von 6 bis 30 µm, bevorzugt bis 15 µm aufweisen, die Konzentration der jeweiligen Übergangsmetallkationen in einem Kern, beispielsweise mit einem Durchmesser von bis zu 5 µm, im Wesentlichen konstant, und außerhalb des Kerns variiert sie, wie oben beschrieben.

Bevorzugt ist es, wenn die Konzentration von mindestens einem der Übergangsmetalle, aufgetragen über den Radius des betreffenden Partikels, mindestens einen Wendepunkt aufweist. Besonders bevorzugt ist es, wenn die weisen die Konzentrationen von mindestens zwei verschiedenen Übergangsmetallkationen, aufgetragen über den Radius des betreffenden Partikels, jeweils mindestens einen Wendepunkt aufweisen, wobei die Wendepunkte vorzugsweise komplementär zueinander sind.

Ganz besonders bevorzugt ist es, wenn die Konzentrationen von mindestens zwei Übergangsmetallkationen mehrere relative Extreme und eine entsprechende Anzahl an Wendepunkten aufweist, beispielsweise die Konzentrationen von Nickelkationen und Mangankationen.

Erfindungsgemäße Partikel weisen über den Durchmesser eine konstante Konzentration an Kobalt auf.

In einer Ausführungsform der vorliegenden Erfindung weisen erfindungsgemäße Partikel über den Durchmesser eine konstante Konzentration an Mangan auf.

In einer Ausführungsform der vorliegenden Erfindung weist die Konzentration von einem oder vorzugsweise zwei der Übergangsmetallkationen Extremwerte und gegebenenfalls Wendepunkte auf, die Konzentration eines dritten Übergangsmetalls hingegen ist im Wesentlichen konstant, beispielsweise im Maßstab von ±0,1 mol-%.

In einer ganz besonders bevorzugten Ausführungsform der vorliegenden Erfindung weisen die Konzentrationen von Nickel und von Mangan relative Extremwerte auf, und die Konzentration von Kobalt bleibt im Wesentlichen konstant.

In einer Ausführungsform der vorliegenden Erfindung können sich innerhalb des betreffenden erfindungsgemäßen Partikels die Konzentration der Kationen von mindestens einem der Übergangsmetalle im Sinne einer stetigen Funktion oder in Schritten von maximal 10 mol-% ändern, bevorzugt im Sinne einer stetigen Funktion oder in Schritten von maximal 5 mol-%, beispielsweise in Schritten von 2 bis 7 mol-%.

In einer Ausführungsform der vorliegenden Erfindung können sich innerhalb des betreffenden erfindungsgemäßen sphärischen Partikels die Konzentration der Kationen von mindestens einem der Übergangsmetalle zwischen zwei relativen Extremwerten um mindestens 6 mol-% unterscheiden, bevorzugt um mindestens 10 mol-%.

Wenn sich die Konzentration von Übergangsmetallkationen in Schritten von maximal 10 mol-% oder vorzugsweise in Schritten von 2 bis 7 mol-% ändert, so können sich Schichten mit konstanter Zusammensetzung in erfindungsgemäßen Partikeln ausbilden. Derartige Schichten können beispielsweise eine Dicke im Bereich von 0,2 bis 5 µm aufweisen, wobei solche Partikel, die einen Durchmesser von mindestens 10 µm aufweisen, beispielsweise Schichten mit einer maximalen Dicke von 0,5 µm aufweisen können.

In einer Ausführungsform der vorliegenden Erfindung weisen erfindungsgemäße Partikel im Mittel eine Zusammensetzung auf, die der folgenden Formel (I) entspricht:

NiₐCO_{b}Mn_{c}M_{d}Oₑ(OH)_{f} (I)

in der die Variablen wie folgt definiert sind:
- M: Mg oder AI und/oder ein oder mehrere Übergangsmetalle, gewählt aus Fe, Cr und V
- a: im Bereich von 0,4 bis 0,8, bevorzugt 0,48 bis 0,65,
- b: im Bereich von 0,1 bis 0,4, bevorzugt 0,15 bis 0,25,
- c: im Bereich von 0,1 bis 0,5, bevorzugt 0,15 bis 0,35,
- d: im Bereich von null bis 0,2, bevorzugt null bis 0,02,
wobei gilt: a + b + c + d = 1,
- e: im Bereich von null bis 1, bevorzugt 0,5 bis 0,8,
- f: im Bereich von 0,5 bis 2, bevorzugt 1,1 bis 1,6,
und wobei die mittlere Oxidationsstufe von Ni, Co und Mn im Bereich von 2,1 bis 3,2 liegt.

Dabei ist unter der mittleren Oxidationsstufe von Ni, Co und Mn die über sämtliche Übergangsmetalle des betreffenden erfindungsgemäßen Partikels gemittelte Oxidationsstufe zu verstehen.

In einer anderen Ausführungsform der vorliegenden Erfindung weisen erfindungsgemäße Partikel im Mittel eine Zusammensetzung auf, die der folgenden Formel (Ia) entspricht:

Ni_{a'}CO_{b'}Mn_{c'}M_{d'}O_{e'}(OH)_{f'} (Ia)

in der die Variablen wie folgt definiert sind:
- M: Mg und/oder ein oder mehrere Übergangsmetalle, gewählt aus Fe, Cr und V
- a': im Bereich von 0,1 bis 0,4, bevorzugt 0,18 bis 0,35
- b': im Bereich von null bis 0,3, bevorzugt 0,1 bis 0,3
- c': im Bereich von 0,4 bis 0,75 bevorzugt 0,48 bis 0,67
- d': im Bereich von null bis 0,2, bevorzugt null bis 0,05
wobei gilt: a' + b' + c' + d' = 1,
- e': im Bereich von null bis 1,2, bevorzugt 0,1 bis 0,6
- f': im Bereich von 0,5 bis 2, bevorzugt 1,0 bis 1,9
und wobei die mittlere Oxidationsstufe von Ni, Co und Mn im Bereich von 2,1 bis 3,2 liegt.

In einer Ausführungsform der vorliegenden Erfindung weisen erfindungsgemäße Partikel im Mittel eine Zusammensetzung auf, die der folgenden Formel (II) entspricht:

Ni_{a'}CO_{b'}Mn_{c'}M_{d'}O_{e'}(OH)ⱼ(CO₃)ₕ (II)

in der die Variablen wie folgt definiert sind:
- M: Mg und/oder ein oder mehrere Übergangsmetalle, gewählt aus Fe, Cr und V
- a': im Bereich von 0,1 bis 0,4, bevorzugt 0,18 bis 0,35
- b': im Bereich von null bis 0,3, bevorzugt 0,1 bis 0,3
- c': im Bereich von 0,4 bis 0,75 bevorzugt 0,48 bis 0,67
- d': im Bereich von null bis 0,2, bevorzugt null bis 0,05
wobei gilt: a' + b' + c' + d' = 1,
- e': im Bereich von null bis 0,6, bevorzugt null bis 0,2,
- h: im Bereich von 0,4 bis 1, bevorzugt 0,7 bis 1,
- j: im Bereich von null bis 0,2, bevorzugt 0,01 bis 0,1.

Erfindungsgemäße Partikel eignen sich sehr gut, um Elektrodenmaterialien für Lithium-Ionen-Batterien herzustellen, insbesondere lithiierte (Lithium-haltige) Übergangsmetallmischoxide.

Ein weiterer Gegenstand der vorliegenden Erfindung ist ein Verfahren zur Herstellung von erfindungsgemäßen Partikeln, kurz auch erfindungsgemäßes Herstellungsverfahren genannt. Bei dem erfindungsgemäßen Herstellungsverfahren handelt es sich vorzugsweise um ein mehrere Schritte umfassendes Verfahren. In einer bevorzugten Ausführungsform der vorliegenden Erfindung weist das erfindungsgemäße Herstellungsverfahren die folgenden Schritte auf:
(A) Bereitstellen einer wässrigen Lösung von mindestens einem Alkalimetall(hydrogen)carbonat oder mindestens einem Alkalimetallhydroxid und gegebenenfalls mindestens einer Verbindung L, gewählt aus organischen Aminen und Ammoniak,
(B) Bereitstellen von mindestens zwei wässrigen Lösungen (B1) und (B2) von Übergangsmetallsalzen, die insgesamt mindestens zwei Übergangsmetalle enthalten, wobei die wässrigen Lösungen (B1) und (B2) unterschiedliche Molverhältnisse der Übergangsmetalle aufweisen,
(C) Durchführen einer Fällung von gemischten Übergangsmetallcarbonaten, Übergangsmetallhydroxiden oder Übergangsmetallcarbonathydroxiden in einer Rührkesselkaskade von mindestens zwei Rührkesseln oder in einem Satzreaktor, wobei man durch
   (C1) Einspeisen von Lösungen (B1) und (B2) in verschiedene Rührkessel der Rührkesselkaskade oder durch
   (C2) zeitlich oder mengenmäßig unterschiedliches Einspeisen von Lösungen (B1) und (B2) in den Satzreaktor
      Fällungen bei unterschiedlichen Übergangsmetallkonzentrationen herbeiführt,
(D) Abtrennen der so gefällten sphärischen Partikel.

Zur Durchführung von Schritt (A) löst man mindestens ein Alkalimetallhydroxid, beispielsweise Kaliumhydroxid oder vorzugsweise Natriumhydroxid, oder mindestens ein Alkalimetall(hydrogen)carbonat in Wasser. Die entsprechende Lösung wird im Rahmen der vorliegenden Erfindung auch "Lösung (A)" genannt.

Beispiele für Alkalimetallhydroxid, Alkalimetallcarbonat und Alkalimetallhydrogencarbonat sind gewählt aus Natriumhydroxid, Kaliumhydroxid, Natriumcarbonat, Kaliumcarbonat, Natriumhydrogencarbonat und Kaliumhydrogencarbonat, und aus Mischungen davon.

In einer Ausführungsform der vorliegenden Erfindung hat Lösung (A) eine Konzentration von Alkalimetallhydroxid im Bereich von 1 bis 50 Gew.-%, bevorzugt 10 bis 25 Gew.-%. In einer anderen Ausführungsform der vorliegenden Erfindung hat Lösung (A) eine Konzentration von Alkalimetall(hydrogen)carbonat im Bereich von 1 Gew.-% bis maximal zu einer gesättigten Lösung, im Falle von NaHCO₃ bis zu etwa 10 Gew.-%, im Falle von Na₂CO₃ bis zu 21,5 Gew.-%, jeweils bei 20 °C, oder mehr bei entsprechend höherer Temperatur.

In einer Ausführungsform der vorliegenden Erfindung setzt man einen Überschuss an Alkalimetallhydroxid oder Alkalimetall(hydrogen)carbonat ein, bezogen auf Übergangsmetall. Der molare Überschuss kann beispielsweise im Bereich von 1,1 zu 1 bis 100 zu 1 liegen. In einer bevorzugten Ausführungsform der vorliegenden Erfindung arbeitet man mit stöchiometrischen Mengen an Alkalimetallhydroxid bzw. Alkalimetall(hydrogen)carbonat, bezogen auf Übergangsmetall.

In einer bevorzugten Ausführungsform der vorliegenden Erfindung setzt man so viel Ligand L ein, besonders bevorzugt so viel Ammoniak, dass in der Mutterlauge im Bereich von 0,05 bis 1 mol/l, bevorzugt 0,1 bis 0,7 mol/l Ligand L bzw. Ammoniak gemessen werden. Ganz besonders bevorzugt sind Ammoniakmengen, bei denen die Nickellöslichkeit in der Mutterlauge maximal 1000 ppm, besonders bevorzugt maximal 500 ppm beträgt. Unter Ammoniakkonzentration wird die Konzentration von Ammoniak einschließlich Ammonium verstanden. Entsprechend werden unter organischen Aminen auch organische protonierte Amine verstanden.

Zur Durchführung von Schritt (B) setzt man mindestens zwei verschiedene Lösungen (B1) und (B2) an, die insgesamt mindestens 2 verschiedene Übergangsmetalle enthalten, und zwar in Form von wasserlöslichen Salzen, wobei die wässrigen Lösungen (B1) und (B2) unterschiedliche Molverhältnisse der Übergangsmetalle aufweisen. Dabei wird unter "wasserlöslich" verstanden, dass sich das betreffende Übergangsmetallsalz in destilliertem Wasser bei 20°C zu mindestens 10 g/l löst, bevorzugt sind mindestens 50 g/l. Beispiele sind die Halogenide, Nitrate, Acetate und insbesondere die Sulfate von Nickel, Kobalt, Mangan, Titan, Vanadium, Chrom und Eisen, vorzugsweise in Form ihrer Aquokomplexe.

In einer Ausführungsform der vorliegenden Erfindung enthalten die wässrigen Lösungen (B1) und (B2) Kationen von jeweils mindestens zwei verschiedenen Übergangsmetallen, bevorzugt von mindestens drei verschiedenen Übergangsmetallen.

Für die wässrigen Lösungen (B1) und (B2) kann man die Konzentrationen in weiten Bereichen wählen. Bevorzugt wählt man die Konzentrationen so, dass sie im Bereich von insgesamt 1 bis 1,8 mol Übergangsmetall/kg Lösung liegen, besonders bevorzugt sind 1,5 bis 1,7 mol Übergangsmetall/kg Lösung.

Die wässrigen Lösungen (B1) und (B2) können einen pH-Wert im Bereich von 4 bis 7 aufweisen.

Vorzugsweise enthalten weder wässrige Lösung (B1) noch wässrige Lösung (B2) Ligand L.

In einer Ausführungsform der vorliegenden Erfindung ist der Anteil von mindestens einem der Übergangsmetalle in wässriger Lösung (B1) um mindestens 5 mol-% verschieden von dem Anteil in wässriger Lösung (B2). Beispielsweise kann der Anteil von Ni²⁺ in wässriger Lösung (B1) um mindestens 5 mol-% höher sein als in (B2). Beispielsweise kann der Anteil von Mn²⁺ in wässriger Lösung (B1) um mindestens 5 mol-% geringer sein als in (B2). Anteile werden in diesem Zusammenhang auf gesamtes Übergangsmetall bezogen.

Zur Durchführung von Schritt (C) des erfindungsgemäßen Verfahrens geht man so vor, dass man eine Fällung von gemischten Übergangsmetallcarbonaten, Übergangsmetallhydroxiden oder Übergangsmetallcarbonathydroxiden in einer Rührkesselkaskade von mindestens zwei Rührkesseln oder in einem Satzreaktor durchführt, wobei man durch
(C1) Einspeisen von wässriger Lösung (B1) und (B2) in verschiedene Rührkessel der Rührkesselkaskade oder durch
(C2) zeitlich oder mengenmäßig unterschiedliches Einspeisen von Lösungen (B1) und (B2) in den Satzreaktor

Fällungen bei unterschiedlichen Übergangsmetallkonzentrationen herbeiführt.

Durch die Durchführung von Schritt (C) führt man Fällungen bei unterschiedlichen Übergangsmetallkonzentrationen herbei. Darunter ist zu verstehen, dass in der Flüssigkeitsphase über die Zeit - Variante (C2) - oder lokal - Variante (C1) - unterschiedliche Konzentrationen an Übergangsmetallkationen und unterschiedliche Verhältnisse der Konzentrationen der eingesetzten Übergangsmetallkationen vorliegen. Das am jeweiligen Ort der Rührkesselkaskade bzw. zum jeweiligen Zeitpunkt der Fällung im Satzreaktor vorliegende Verhältnis der Konzentrationen der eingesetzten Übergangsmetallkationen bestimmt dann die Zusammensetzung der verschiedenen Schichten oder Stellen in den erfindungsgemäßen Partikeln.

Während Schritt (C) kann man vorzugsweise außerdem Lösung (A) dosieren, ohne oder mit Ligand L.

In einer Variante dosiert man während Schritt (C) Lösung (A) und separat davon Ligand L, oder zwei Lösungen (A), von denen eine zusätzlich Ligand L enthält und die andere nicht.

Zur Durchführung von Schritt (C) geht man vorzugsweise so vor, dass man bei während der Fällung wechselnden molaren Verhältnissen von mindestens zwei der Übergangsmetallkationen, beispielsweise Ni²⁺, Mn²⁺ arbeitet, wobei die Konzentration von mindestens einem der Übergangsmetallkationen, beispielsweise Ni²⁺ oder Mn²⁺, während der Fällung mindestens ein lokales Minimum oder ein lokales Maximum durchläuft oder vorzugsweise zusätzlich mindestens einen Wendepunkt. Dazu kann man, wenn man in einem Satzreaktor zu arbeiten wünscht, im zeitlichen Verlauf der Fällung unterschiedliche Lösungen, die die entsprechenden Übergangsmetallkationen enthalten, dosieren. Wenn man in einer Rührkesselkaskade zu arbeiten wünscht, kann man in die verschiedenen Rührkessel unterschiedliche wässrige Lösungen (B1) und (B2) dosieren, die die entsprechenden Übergangsmetallkationen enthalten.

Zur Durchführung von Schritt (C) geht man vorzugsweise so vor, dass man bei während der Fällung wechselnden molaren Verhältnissen von Ni²⁺, Mn²⁺ und gegebenenfalls Co²⁺ arbeitet, wobei die Konzentration von mindestens einem der Übergangsmetale, vorzugsweise Ni²⁺ und/oder Mn²⁺ während der Fällung mindestens ein lokales Minimum oder ein lokales Maximum durchläuft oder vorzugsweise zusätzlich mindestens einen Wendepunkt. Dazu kann man, wenn man in einem Satzreaktor zu arbeiten wünscht, im zeitlichen Verlauf der Fällung unterschiedliche wässrige Lösungen (B1) und (B2), die Nickelsalz, Mangansalz und gegebenenfalls Kobaltsalz enthalten, dosieren. Wenn man in einer Rührkesselkaskade zu arbeiten wünscht, kann man in die verschiedenen Rührkessel unterschiedliche wässrige Lösungen (B1) und (B2) dosieren, die Nickelsalz, Mangansalz und gegebenenfalls Kobaltsalz enthalten.

Bevorzugt geht man so vor, dass man in einem Rührgefäß eine wässrige Lösung vorlegt, die Ligand L enthält, und in einer Phase des Schritts (C) eine Lösung (B1) dosiert, die Nickelsalz, Mangansalz und gegebenenfalls Kobaltsalz enthält, und simultan Lösung (A). Die Dosierung steuert man so, dass der pH-Wert der Mutterlauge im Bereich von 10,5 bis 11,3 ist. Dann dosiert man eine Lösung (B2), die Nickelsalz, Mangansalz und gegebenenfalls Kobaltsalz in einer anderen molaren Zusammensetzung enthält, und simultan eine weitere Lösung (A), die mindestens ein Alkalimetallhydroxid oder mindestens ein Alkalimetallcarbonat oder mindestens ein Alkalimetallhydrogencarbonat enthält.

Besonders bevorzugt geht man so vor, dass man in einem Rührgefäß eine wässrige Lösung vorlegt, die Ligand L enthält, und in einer Phase des Schritts (C) eine Lösung (B1) dosiert, die Nickelsalz, Mangansalz und gegebenenfalls Kobaltsalz enthält, und simultan Lösung (A). Die Dosierung steuert man so, dass der pH-Wert der Mutterlauge im Bereich von 10,5 bis 11,3 ist. Dann dosiert man eine wässrige Lösung (B1) und weiterhin wässrige Lösung (B2), die Nickelsalz und Mangansalz in einer anderen molaren Zusammensetzung als (B1) enthält, und simultan eine weitere Lösung (A), die mindestens ein Alkalimetallhydroxid oder mindestens ein Alkalimetallcarbonat oder mindestens ein Alkalimetallhydrogencarbonat enthält. Die Dosierung von wässriger Lösung (B2) kann langsam beginnen oder abrupt. Die Dosierung von wässriger Lösung (B2) kann zusätzlich zur Dosierung von wässriger Lösung (B1) erfolgen oder anstatt.

In einer Ausführungsform der vorliegenden Erfindung kann man, wenn man mit einem Satzreaktor zu arbeiten wünscht, nicht nur einmal, sondern mehrfach die Konzentrationsverhältnisse der Übergangsmetallkationen ändern.

So kann man beispielsweise zunächst nur wässrige Lösung (B1) dosieren, danach wässrige Lösung (B2) und gegebenenfalls wässrige Lösung (B1), danach wieder ausschließlich wässrige Lösung (B1), dann wieder wässrige Lösung (B2) und gegebenenfalls wässrige Lösung (B1), beispielsweise in einmaligem oder bis zu 20-maligem Wechsel.

In einer anderen Variante wechselt man die Konzentrationsverhältnisse der Übergangsmetallkationen mehrfach, indem man zunächst wässrige Lösung (B1) und wässrige Lösung (B2) in einem Mengenverhältnis dosiert, danach in einem anderen Mengenverhältnis, danach wieder im ersten Mengenverhältnis, danach wieder im anderen Mengenverhältnis, beispielsweise in einmaligem oder bis zu 20-maligem Wechsel.

In einer bevorzugten Ausführungsform dosiert man zumindest zeitweise gleichzeitig wässrige Lösung (B1) und (B2), wobei man beide Lösungen vor Zutritt zum Reaktor vermischt, beispielsweise in einem statischen Mischer.

In einer Ausführungsform der vorliegenden Erfindung leitet man kontinuierlich oder zeitweise Wasser in das Rührgefäß ein, beispielsweise im Bereich von null bis 300 Vol.-% der Summe aller wässrigen Lösungen (A), (B1) und (B2), bevorzugt sind null bis 50%.

In einer Ausführungsform der vorliegenden Erfindung führt man Schritt (C) des erfindungsgemäßen Herstellverfahrens bei Temperaturen im Bereich von 10 bis 85°C durch, bevorzugt bei Temperaturen im Bereich von 20 bis 50°C.

In einer Ausführungsform der vorliegenden Erfindung führt man Schritt (C) des erfindungsgemäßen Herstellverfahrens bei einem pH-Wert im Bereich von 7,5 bis 12,5 durch, bevorzugt sind 11,3 bis 12,0. Dabei kann der pH-Wert im Verlauf der Durchführung von Schritt (C) im Wesentlichen konstant sein oder um bis zu 0,2 Einheiten zunehmen oder um bis zu 1,0 Einheiten abnehmen oder um bis zu 0,2 Einheiten schwanken. Die Untergrenze von 7,5 bzw. die Obergrenze von 12,5 werden im Falle der Fällung von Hydroxiden jedoch nicht unter- bzw. überschritten. Wünscht man Carbonate auszufällen, so ist es bevorzugt, in einem pH-Wert-Bereich von 7,5-8,5 zu arbeiten, jeweils gemessen bei 23°C in der Mutterlauge

In einer Ausführungsform der vorliegenden Erfindung führt man Schritt (C) des erfindungsgemäßen Herstellverfahrens bei einem Druck im Bereich von 500 mbar bis 20 bar durch, bevorzugt ist Normaldruck.

Während der Durchführung von Schritt (C) des erfindungsgemäßen Herstellverfahrens kann die Zulaufgeschwindigkeit von wässriger Lösung (B1) bzw. (B2) jeweils konstant sein oder sich innerhalb von gewissen Grenzen ändern.

Man kann Schritt (C) des erfindungsgemäßen Herstellverfahrens unter Luft, unter Inertgasatmosphäre, beispielsweise unter Edelgas- oder Stickstoffatmosphäre, oder unter reduzierender Atmosphäre durchführen. Als Beispiele für reduzierende Gase seien beispielsweise CO und SO₂ genannt. Bevorzugt arbeitet man unter Inertgasatmosphäre.

Während der Durchführung von Schritt (C) ist es möglich, aus der Rührkesselkaskade bzw. dem Satzreaktor Mutterlauge abzuziehen, ohne bereits ausgefällte Partikel zu entnehmen. Als Mutterlauge werden dabei Wasser, wasserlösliche Salze sowie gegebenenfalls weitere, sich in Lösung befindliche Additive bezeichnet. Als wasserlösliche Salze kommen beispielsweise Alkalimetallsalze der Gegenionen von Übergangsmetallen in Frage, beispielsweise Natriumacetat, Kaliumacetat, Natriumsulfat, Kaliumsulfat, Natriumnitrat, Kaliumnitrat, Natriumhalogenid, insbesondere Natriumchlorid, Kaliumhalogenid, weiterhin zusätzliche Salze, gegebenenfalls eingesetzte Additive, sowie gegebenenfalls überschüssiges Alkalimetallcarbonat oder Alkalimetallhydroxid, weiterhin Ligand L. Weiterhin kann die Mutterlauge Spuren von löslichen Übergangsmetallsalzen enthalten. Beispiele für geeignete Vorrichtungen, um Mutterlauge abzuziehen, ohne ausgefällte Partikel zu entnehmen, sind Sedimentierer, Schrägklärapparate, Zentrifugen, Filter und Klärapparate sowie Trennapparate, die sich den Dichteunterschied von Mutterlauge und Partikeln zunutze macht.

In einer Ausführungsform der vorliegenden Erfindung kann man über einen Schrägklärapparat, der in zwei Abschnitte eingeteilt ist, Mutterlauge abziehen, in dem man neben ausgefällten Partikeln auch durch das Rühren im Rührgefäß in die Suspension eingebrachte Gasblasen abtrennt.

In einer Ausführungsform der vorliegenden Erfindung geht man so vor, dass man wässrige Lösung (B2) in einem mit dem Satzreaktor verbundenen Gefäß herstellt und dann in den Satzreaktor dosiert. Dazu kann man beispielsweise in dem mit dem Satzreaktor verbundenen Gefäß zunächst wässrige Lösung (B1) mit einem gewissen Molverhältnis der Übergangsmetalle herstellen und in den Satzreaktor dosieren. Nachdem man einen gewissen Anteil von wässriger Lösung (B1) dosiert hat, gibt man Übergangsmetallsalze in einem anderen Molverhältnis der Übergangsmetalle zu und stellt dadurch wässrige Lösung (B2) her. Dann dosiert man wässrige Lösung (B2) in den Satzreaktor. In dieser Ausführungsform hat wässrige Lösung (B2) vorzugsweise keine konstante Zusammensetzung.

In einer Ausführungsform der vorliegenden Erfindung stellt man eine dritte wässrige Lösung (B3) bereit, die Übergangsmetallkationen in einem molaren Verhältnis enthält, die von dem molaren Verhältnis der Übergangsmetallkationen von wässriger Lösung (B1) und (B2) abweicht, und dosiert sie in einen dritten Rührkessel einer Kaskade bzw. zu einem anderen Zeitpunkt in den Satzreaktor.

In einer Ausführungsform der vorliegenden Erfindung geht man so vor, dass man Konzentration von L und pH Wert so wählt, dass die Konzentration löslicher Ni²⁺-Salze in der Mutterlauge unter 1000 ppm und die Konzentrationen von löslichen Co²⁺-Salzen und Mn²⁺-Salzen jeweils unter 200 ppm liegen, bevorzugt liegt die Konzentration löslicher Ni²⁺-Salze in der Mutterlauge unter 400 ppm und die Konzentrationen von löslichen Co²⁺-Salzen und Mn²⁺-Salzen jeweils unter 50 ppm. Als untere Grenze für die Summe von löslichen Ni²⁺-Salzen, Co²⁺-Salzen und Mn²⁺-Salzen jeweils gilt dabei 5 ppm.

Die Konzentration an L kann während der Durchführung von Schritt L konstant bleiben oder sich vorzugsweise ändern, besonders bevorzugt senkt man sie, beispielsweise dadurch dass man weniger Ligand L zugibt als mit Mutterlauge abzieht.

In einer Ausführungsform der vorliegenden Erfindung arbeitet man so, dass man durch Rühren eine Energie von über 2 W/I, bevorzugt über 4 W/I in die entstehende Suspension einträgt. In einer Variante ändert man den Energieeintrag während der Reaktionszeit, so kann man beispielsweise während der Durchführung des erfindungsgemäßen Herstellungsverfahrens den Energieeintrag durch Rühren variieren. In einer speziellen Variante geht man so vor, dass man während dem ersten Drittel der Reaktionszeit bei höherem mittleren Rühreintrag arbeitet, z.B. bei 8 W/I, als in dem folgenden zwei Dritteln, dort beispielsweise bei 4 W/I, 5,5 W/I oder 6,3 W/I. In einer bevorzugten Ausführungsform trägt man eine mittlere Rührleistung von maximal 20 W/I ein.

In einer Ausführungsform der vorliegenden Erfindung kann man Schritt (C) über eine Dauer von 30 Minuten bis zu 48 Stunden durchführen, wenn man in einem Satzreaktor arbeitet.

Wünscht man in einer Rührkesselkaskade zu arbeiten, so ist die Dauer von Schritt (C) theoretisch unbegrenzt, und die mittlere Verweilzeit kann im Bereich von 30 Minuten bis zu 48 Stunden liegen.

In Schritt (D) des erfindungsgemäßen Herstellverfahrens trennt man die so hergestellten erfindungsgemäßen Partikel ab, und zwar von der Mutterlauge. Das Abtrennen kann beispielsweise durch Filtrieren, Zentrifugieren, Dekantieren, Sprühtrocknen oder Sedimentieren erfolgen oder durch eine Kombination von zwei oder mehr der vorstehend genannten Operationen. Als Vorrichtungen sind beispielsweise Filterpressen, Bandfilter, Sprühtrockner, Hydrozyklone, Schrägklärapparate oder Kombination der vorstehend genannten Vorrichtungen geeignet.

Zur Verbesserung der Abtrennung kann beispielsweise mit reinem Wasser waschen oder mit einer wässrigen Lösung von Alkalimetallcarbonat oder Alkalimetallhydroxid, insbesondere mit einer wässrigen Lösung von Natriumcarbonat, Kaliumcarbonat, Natriumhydroxid, Kaliumhydroxid oder Ammoniak. Wasser und wässrige Lösung von Alkalimetallhydroxid, insbesondere von Natriumhydroxid, sind bevorzugt.

Das Waschen kann beispielsweise unter Anwendung von erhöhtem Druck oder erhöhter Temperatur, beispielsweise 30 bis 50°C, erfolgen. In einer anderen Variante führt man das Waschen bei Zimmertemperatur durch. Die Effizienz des Waschens kann man durch analytische Maßnahmen überprüfen. So kann man beispielsweise den Gehalt an Übergangsmetall(en) im Waschwasser analysieren. In einer Variante kann man die elektrische Leitfähigkeit des Waschwassers messen.

Im Falle, dass man mit Wasser statt mit einer wässrigen Lösung von Alkalimetallhydroxid wäscht, kann man mit Hilfe von Leitfähigkeitsuntersuchungen am Waschwasser prüfen, ob noch wasserlösliche Substanzen, beispielsweise wasserlösliche Salze ausgewaschen werden können.

Im Anschluss an das Abtrennen der erfindungsgemäßen Partikel kann man trocknen. Das Trocknen kann man beispielsweise mit Inertgas durchführen oder mit Luft. Das Trocknen kann man beispielsweise bei einer Temperatur im Bereich von 30 bis 150°C durchführen. Wenn man das Trocknen mit Luft durchführt, so beobachtet man in vielen Fällen, dass einige Übergangsmetalle partiell oxidieren, beispielsweise von Mn²⁺ zu Mn⁴⁺ und Co²⁺ zu Co³⁺, und man beobachtet eine Schwarzfärbung der erfindungsgemäßen Partikel. Bevorzugt ist es, mit Luft zu trocknen.

Erfindungsgemäße Partikel sind gut geeignet, um sie zu Kathodenmaterialien für Lithium-Ionen-Batterien umzusetzen. Ein weiterer Gegenstand der vorliegenden Erfindung ist daher die Verwendung von erfindungsgemäßen Partikeln zur Herstellung von Lithium-haltigen Übergangsmetallmischoxiden. Ein weiterer Gegenstand der vorliegenden Erfindung ist ein Verfahren zur Herstellung von Lithium-haltigen Übergangsmetallmischoxiden unter Verwendung von erfindungsgemäßen Partikeln, kurz auch erfindungsgemäßer Prozess genannt.

Zur Durchführung des erfindungsgemäßen Prozesses kann man beispielsweise so vorgehen, dass man erfindungsgemäße Partikel mit mindestens einer Lithium-Verbindung mischt und bei Temperaturen im Bereich von 500 bis 1000°C miteinander umsetzt.

Als Lithium-Verbindung kann man vorzugsweise Lithiumsalze wählen, beispielsweise Li₂O, LiOH, LiNO₃, Li₂SO₄, LiCI oder Li₂CO₃, jeweils in wasserfreier Form oder, so existent, als Hydrat, bevorzugt ist LiOH, beispielsweise als Monohydrat, und besonders bevorzugt Li₂CO₃.

Die Mengen an erfindungsgemäßen Partikeln und Lithiumverbindung wählt man dabei so, dass man die gewünschte Stöchiometrie des Kathodenmaterials erhält. Vorzugsweise wählt man erfindungsgemäße Partikel und Lithiumverbindung so, dass das Molverhältnis aus Lithium zur Summe aller Übergangsmetalle und gegebenenfalls M im Bereich von 1 :1 bis 1,3 zu 1 liegt, bevorzugt 1,01 zu 1 bis 1,1 zu 1.

Die Umsetzung bei 500 bis 1000°C kann man in einem Ofen durchführen, beispielsweise in einem Drehrohrofen, in einem Muffelofen, in einem Pendelofen, in einem Rollenherdofen oder in einem Durchschiebeofen. Auch Kombinationen von zweien oder mehreren der vorstehend genannten Öfen sind möglich.

Die Umsetzung bei 500 bis 1000°C kann man über einen Zeitraum von 30 Minuten bis 24 Stunden durchführen. Man kann bei einer Temperatur umsetzen oder ein Temperaturprofil fahren. Wenn man die Umsetzung bei 500 bis 1000°C beispielsweise bei 100°C oder mindestens 925°C über einen sehr langen Zeitraum durchführt, beispielsweise 24 Stunden lang, so kann man eine Diffusion der Kationen von Nickel, Mangan, Kobalt und gegebenenfalls M beobachten. Diese Diffusion kann gewünscht sein. Zur Herstellung von erfindungsgemäßen sphärischen Partikeln ist es jedoch bevorzugt, eine Umsetzung bei 1000°C oder vorzugsweise 925°C über einen kürzeren Zeitraum durchzuführen, beispielsweise 30 Minuten bis 4 Stunden. Wünscht man erfindungsgemäße Partikel bei 950°C herzustellen, so ist ein Zeitraum im Bereich von 30 Minuten bis 4 Stunden bevorzugt, bei einer Temperatur von 900°C ein Bereich von 30 Minuten bis 6 Stunden.

Durch die Durchführung des erfindungsgemäßen Prozesses erhält man Lithium-haltige Übergangsmetallmischoxide in partikulärer Form, die ebenfalls Gegenstand der vorliegenden Erfindung sind.

Ein besonderer Gegenstand der vorliegenden Erfindung sind Lithium-haltige Übergangsmetallmischoxide gemäß Anspruch 12 in partikulärer Form, kurz auch erfindungsgemäße Mischoxide oder erfindungsgemäße Übergangsmetallmischoxide genannt. Erfindungsgemäße Mischoxide sind dadurch gekennzeichnet, dass sie Kationen von mindestens zwei Übergangsmetallen aufweist, gewählt aus Nickel, Kobalt, Mangan, Titan, Vanadium, Chrom und Eisen, dadurch gekennzeichnet, dass die Konzentration von mindestens einem der Übergangsmetallkationen, aufgetragen über den Radius des betreffenden Übergangsmetallmischoxids, mindestens einen relativen Extremwert aufweisen.

Erfindungsgemäße Mischoxide liegen in Form von sphärischen Partikeln vor. Dabei sollen - wie auch bei erfindungsgemäßen Partikeln - nicht nur solche Partikel als sphärisch mit umfasst sein, die exakt kugelförmig sind, sondern auch solche Partikel, bei denen sich maximaler und minimaler Durchmesser von mindestens 95 % (Zahlenmittel) einer repräsentativen Probe um bis maximal 5% unterscheiden.

Man beobachtet, dass die Mobilität der Übergangsmetallionen innerhalb der Partikel während des erfindungsgemäßen Prozesses äußerst gering ist. Das zu Einheitlichkeit der Zusammensetzung im Zusammenhang mit erfindungsgemäßen Partikeln gesagte gilt also für erfindungsgemäße Mischoxide entsprechend.

In einer Ausführungsform der vorliegenden Erfindung liegen Partikel von erfindungsgemäßem Mischoxid als Agglomerate von Primärpartikeln vor. Die Primärpartikel können beispielsweise einen mittleren Durchmesser im Bereich von 10 nm bis 500 nm aufweisen.

Partikel von erfindungsgemäßem Mischoxid können einen mittleren Durchmesser (D50) im Bereich von 0,1 bis 35 µm aufweisen, bevorzugt 2 bis 30 µm, beispielsweise gemessen durch Lichtstreuung. Geeignete Geräte sind kommerziell erhältlich, beispielsweise Malvern Mastersizer.

In einer Ausführungsform der vorliegenden Erfindung haben Partikel von erfindungsgemäßem Mischoxid eine enge Partikeldurchmesserverteilung. So ist es bevorzugt, dass die folgenden Ungleichungen erfüllt sind: 0,5· (D10) ≥ (D50) und (D90) ≤ 1,7 · (D50).

In einer Ausführungsform der vorliegenden Erfindung haben Partikel von erfindungsgemäßem Mischoxid eine BET-Oberfläche von bis zu 10 m²/g. Vorzugsweise haben Partikel von erfindungsgemäßem Mischoxid eine BET-Oberfläche von mindestens 0,1 m²/g.

Ein weiterer Gegenstand der vorliegenden Erfindung ist die Verwendung von erfindungsgemäßem Mischoxid als oder zur Herstellung von Kathodenmaterial für Lithium-Ionen-Batterien.

Kathodenmaterial kann neben erfindungsgemäßem Mischoxid Kohlenstoff in elektrisch leitfähiger Modifikation enthalten, beispielsweise als Ruß, Graphit, Graphen, Kohlenstoffnanoröhren oder Aktivkohle.

Kathodenmaterial kann weiterhin mindestens ein Bindemittel enthalten, beispielsweise ein polymeres Bindemittel.

Geeignete Bindemittel sind vorzugsweise gewählt aus organischen (Co)polymeren. Geeignete (Co)polymere, also Homopolymere oder Copolymere, kann man beispielsweise wählen aus durch anionische, katalytische oder radikalische (Co)polymerisation erhältlichen (Co)polymeren, insbesondere aus Polyethylen, Polyacrylnitril, Polybutadien, Polystyrol, und Copolymeren von mindestens zwei Comonomeren, gewählt aus Ethylen, Propylen, Styrol, (Meth)acrylnitril und 1,3-Butadien. Außerdem ist Polypropylen geeignet. Weiterhin sind Polyisopren und Polyacrylate geeignet. Besonders bevorzugt ist Polyacrylnitril.

Unter Polyacrylnitril werden im Rahmen der vorliegenden Erfindung nicht nur Polyacrylnitril-Homopolymere verstanden, sondern auch Copolymere von Acrylnitril mit 1,3-Butadien oder Styrol. Bevorzugt sind Polyacrylnitril-Homopolymere.

Im Rahmen der vorliegenden Erfindung wird unter Polyethylen nicht nur Homo-Polyethylen verstanden, sondern auch Copolymere des Ethylens, die mindestens 50 mol-% Ethylen einpolymerisiert enthalten und bis zu 50 mol-% von mindestens einem weiteren Comonomer, beispielsweise α-Olefine wie Propylen, Butylen (1-Buten), 1-Hexen, 1-Octen, 1-Decen, 1-Dodecen, 1-Penten, weiterhin Isobuten, Vinylaromaten wie beispielsweise Styrol, weiterhin (Meth)acrylsäure, Vinylacetat, Vinylpropionat, C₁-C₁₀-Alkylester der (Meth)acrylsäure, insbesondere Methylacrylat, Methylmethacrylat, Ethylacrylat, Ethylmethacrylat, n-Butylacrylat, 2-Ethylhexylacrylat, n-Butylmethacrylat, 2-Ethylhexylmethacrylat, weiterhin Maleinsäure, Maleinsäureanhydrid und Itaconsäureanhydrid. Bei Polyethylen kann es sich um HDPE oder um LDPE handeln.

Im Rahmen der vorliegenden Erfindung wird unter Polypropylen nicht nur Homo-Polypropylen verstanden, sondern auch Copolymere des Propylens, die mindestens 50 mol-% Propylen einpolymerisiert enthalten und bis zu 50 mol-% von mindestens einem weiteren Comonomer, beispielsweise Ethylen und α-Olefine wie Butylen, 1-Hexen, 1-Octen, 1-Decen, 1-Dodecen und 1-Penten. Bei Polypropylen handelt es sich vorzugsweise um isotaktisches oder um im Wesentlichen isotaktisches Polypropylen.

Im Rahmen der vorliegenden Erfindung werden unter Polystyrol nicht nur Homopolymere des Styrols verstanden, sondern auch Copolymere mit Acrylnitril, 1,3-Butadien, (Meth)acrylsäure, C₁-C₁₀-Alkylester der (Meth)acrylsäure, Divinylbenzol, insbesondere 1,3-Divinylbenzol, 1,2-Diphenylethylen und α-Methylstyrol.

Ein anderes bevorzugtes Bindemittel ist Polybutadien.

Andere geeignete Bindemittel sind gewählt aus Polyethylenoxid (PEO), Cellulose, Carboxymethylcellulose, Polyimiden und Polyvinylalkohol.

In einer Ausführungsform der vorliegenden Erfindung wählt man Bindemittel aus solchen (Co)polymeren, die ein mittleres Molekulargewicht M_{w} im Bereich von 50.000 bis 1.000.000 g/mol, bevorzugt bis 500.000 g/mol aufweisen.

Bei Bindemitteln kann es sich um vernetzte oder unvernetzte (Co)polymere handeln.

In einer besonders bevorzugten Ausführungsform der vorliegenden Erfindung wählt man Bindemittel aus halogenierten (Co)polymeren, insbesondere aus fluorierten (Co)polymeren. Dabei werden unter halogenierten bzw. fluorierten (Co)polymeren solche (Co)polymere verstanden, die mindestens ein (Co)monomer einpolymerisiert enthalten, das mindestens ein Halogenatom bzw. mindestens ein Fluoratom pro Molekül aufweist, bevorzugt mindestens zwei Halogenatome bzw. mindestens zwei Fluoratome pro Molekül.

Beispiele sind Polyvinylchlorid, Polyvinylidenchlorid, Polytetrafluorethylen, Polyvinylidenfluorid (PVdF), Tetrafluoroethylen-Hexafluorpropylen-Copolymere, Vinylidenfluorid-Hexafluorpropylen-Copolymere (PVdF-HFP), Vinylidenfluorid-Tetrafluorethylen-Copolymere, Perfluoralkylvinylether-Copolymere, Ethylen-Tetrafluorethylen-Copolymere, Vinylidenfluorid-Chlortrifluorethylen-Copolymere und Ethylen-Chlorfluorethylen-Copolymere.

Geeignete Bindemittel sind insbesondere Polyvinylalkohol und halogenierte (Co)polymere, beispielsweise Polyvinylchlorid oder Polyvinylidenchlorid, insbesondere fluorierte (Co)polymere wie Polyvinylfluorid und insbesondere Polyvinylidenfluorid und Polytetrafluorethylen.

Elektrisch leitfähiges, kohlenstoffhaltiges Material kann man beispielsweise aus Graphit, Ruß, Kohlenstoffnanoröhren, Graphen oder Mischungen von mindestens zwei der vorstehend genannten Stoffen wählen. Im Rahmen der vorliegenden Erfindung kann elektrisch leitfähiges, kohlenstoffhaltiges Material auch kurz als Kohlenstoff (B) bezeichnet werden.

In einer Ausführungsform der vorliegenden Erfindung handelt es sich bei elektrisch leitfähigem, kohlenstoffhaltigem Material um Ruß. Ruß kann beispielsweise gewählt werden aus Lampenruß, Ofenruß, Flammruß, Thermalruß, Acetylenruß, Industrieruß und Furnace Ruß. Ruß kann Verunreinigungen enthalten, beispielsweise Kohlenwasserstoffe, insbesondere aromatische Kohlenwasserstoffe, oder Sauerstoff-haltige Verbindungen bzw. Sauerstoff-haltige Gruppen wie beispielsweise OH-Gruppen. Weiterhin sind Schwefel- oder Eisen-haltige Verunreinigungen in Ruß möglich.

In einer Variante handelt es sich bei elektrisch leitfähigem, kohlenstoffhaltigem Material um partiell oxidierten Ruß.

In einer Ausführungsform der vorliegenden Erfindung handelt es sich bei elektrisch leitfähigem, kohlenstoffhaltigem Material um Kohlenstoffnanoröhren (englisch carbon nanotubes). Kohlenstoffnanoröhren (Kohlenstoffnanoröhren, kurz CNT oder englisch Carbon nanotubes), beispielsweise einwandige Kohlenstoffnanoröhren (englisch single-walled carbon nanotubes, SW CNT) und bevorzugt mehrwandige Kohlenstoffnanoröhren (englisch multi-walled carbon nanotubes, MW CNT), sind an sich bekannt. Ein Verfahren zu ihrer Herstellung und einige Eigenschaften werden beispielsweise von A. Jess et al. in Chemie Ingenieur Technik 2006, 78, 94 - 100 beschrieben.

In einer Ausführungsform der vorliegenden Erfindung haben Kohlenstoffnanoröhren einen Durchmesser im Bereich von 0,4 bis 50 nm, bevorzugt 1 bis 25 nm.

In einer Ausführungsform der vorliegenden Erfindung haben Kohlenstoffnanoröhren eine Länge im Bereich von 10 nm bis 1 mm, bevorzugt 100 nm bis 500 nm.

Unter Graphen werden im Rahmen der vorliegenden Erfindung fast ideal oder ideal zweidimensionale hexagonale Kohlenstoffkristalle verstanden, die analog zu einzelnen Graphitschichten aufgebaut sind.

In einer Ausführungsform der vorliegenden Erfindung liegt das Gewichtsverhältnis von erfindungsgemäßem Übergangsmetallmischoxid und elektrisch leitfähigem, kohlenstoffhaltigem Material im Bereich von 200:1 bis 5:1, bevorzugt 100:1 bis 10:1.

Ein weiterer Aspekt der vorliegenden Beschreibung ist eine Kathode, enthaltend mindestens ein wie vorstehend beschrieben hergestelltes Übergangsmetallmischoxid, mindestens ein elektrisch leitfähiges, kohlenstoffhaltiges Material und mindestens ein Bindemittel.

Erfindungsgemäßes Übergangsmetallmischoxid und elektrisch leitfähiges, kohlenstoffhaltiges Material sind vorstehend beschrieben.

Ein weiterer Gegenstand der vorliegenden Beschreibung sind elektrochemische Zellen, hergestellt unter Verwendung von mindestens einer oben beschriebenen Kathode.

In einer Ausführungsform enthält das Kathodenmaterial:
im Bereich von 60 bis 98 Gew.-%, bevorzugt 70 bis 96 Gew.-% erfindungsgemäßes Übergangsmetallmischoxid,
im Bereich von 1 bis 20 Gew.-%, bevorzugt 2 bis 15 Gew.-% Bindemittel,
im Bereich von 1 bis 25 Gew.-% bevorzugt 2 bis 20 Gew.-% elektrisch leitfähiges, kohlenstoffhaltiges Material.

Die Geometrie von den Kathoden kann man in weiten Grenzen wählen. Bevorzugt ist es, Kathoden in dünnen Filmen auszugestalten, beispielsweise in Filmen mit einer Dicke im Bereich von 10 µm bis 250 µm, bevorzugt 20 bis 130 µm.

In einer Ausführungsform unfassen Kathoden eine Folie, beispielsweise eine Metallfolie, insbesondere eine Aluminiumfolie, oder eine Polymerfolie, beispielsweise eine Polyesterfolie, die unbehandelt oder silikonisiert sein kann.

Ein weiterer Gegenstand der vorliegenden Beschreibung ist die Verwendung von Kathodenmaterialien bzw. Kathoden in elektrochemischen Zellen. Ein weiterer Gegenstand der vorliegenden Beschreibung ist ein Verfahren zur Herstellung von elektrochemischen Zellen unter Verwendung von Kathodenmaterial bzw. von Kathoden. Ein weiterer Gegenstand der vorliegenden Beschreibung sind elektrochemische Zellen, enthaltend mindestens ein Kathodenmaterial oder mindestens eine Kathode. Elektrochemische Zellen enthalten eine Gegenelektrode, die im Rahmen der vorliegenden Beschreibung als Anode definiert wird und die beispielsweise eine Kohlenstoff-Anode, insbesondere eine Graphit-Anode, eine Lithium-Anode, eine Silizium-Anode oder eine Lithium-Titanat-Anode sein kann.

Bei elektrochemischen Zellen kann es sich beispielsweise um Batterien oder um Akkumulatoren handeln. Elektrochemische Zellen können neben Anode und Kathode weitere Bestandteile umfassen, beispielsweise Leitsalz, nicht-wässriges Lösungsmittel, Separator, Stromableiter, beispielsweise aus einem Metall oder einer Legierung, weiterhin Kabelverbindungen und Gehäuse.

In einer Ausführungsform der vorliegenden Beschreibung enthalten elektrische Zellen mindestens ein nicht-wässriges Lösungsmittel, das bei Zimmertemperatur flüssig oder fest sein kann, bevorzugt gewählt aus Polymeren, cyclischen oder nicht-cyclischen Ethern, cyclischen und nicht-cyclischen Acetalen und cyclischen oder nicht cyclischen organischen Carbonaten.

Beispiele für geeignete Polymere sind insbesondere Polyalkylenglykole, bevorzugt Poly-C₁-C₄-alkylenglykole und insbesondere Polyethylenglykole. Dabei können Polyethylenglykole bis zu 20 mol-% ein oder mehrere C₁-C₄-Alkylenglykole einpolymerisiert enthalten. Vorzugsweise handelt es sich bei Polyalkylenglykolen um zweifach mit Methyl oder Ethyl verkappte Polyalkylenglykole.

Das Molekulargewicht M_{w} von geeigneten Polyalkylenglykolen und insbesondere von geeigneten Polyethylenglykolen kann mindestens 400 g/mol betragen.

Das Molekulargewicht M_{w} von geeigneten Polyalkylenglykolen und insbesondere von geeigneten Polyethylenglykolen kann bis zu 5.000.000 g/mol betragen, bevorzugt bis zu 2.000.000 g/mol betragen

Beispiele für geeignete nicht-cyclische Ether sind beispielsweise Diisopropylether, Di-n-Butylether, 1,2-Dimethoxyethan, 1,2-Diethoxyethan, bevorzugt ist 1,2-Dimethoxyethan. Beispiele für geeignete cyclische Ether sind Tetrahydrofuran und 1,4-Dioxan.

Beispiele für geeignete nicht-cyclische Acetale sind beispielsweise Dimethoxymethan, Diethoxymethan, 1,1-Dimethoxyethan und 1,1-Diethoxyethan.

Beispiele für geeignete cyclische Acetale sind 1,3-Dioxan und insbesondere 1,3-Dioxolan.

Beispiele für geeignete nicht-cyclische organische Carbonate sind Dimethylcarbonat, Ethylmethylcarbonat und Diethylcarbonat.

Beispiele für geeignete cyclische organische Carbonate sind Verbindungen der allgemeinen Formeln (III) und (IV) 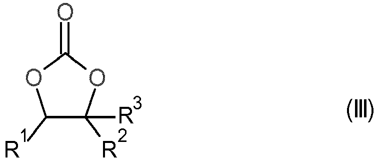 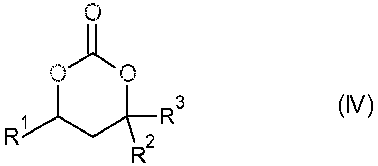 bei denen R¹, R² und R³ gleich oder verschieden sein können und gewählt aus Wasserstoff und C₁-C₄-Alkyl, beispielsweise Methyl, Ethyl, n-Propyl, iso-Propyl, n-Butyl, iso-Butyl, sec.-Butyl und tert.-Butyl, wobei vorzugsweise R² und R³ nicht beide tert.-Butyl sind.

In besonders bevorzugten Ausführungsformen ist R¹ Methyl und R² und R³ sind jeweils Wasserstoff, oder R¹, R² und R³ sind jeweils gleich Wasserstoff.

Ein anderes bevorzugtes cyclisches organisches Carbonat ist Vinylencarbonat, Formel (V).

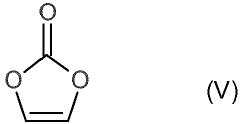

Vorzugsweise setzt man das oder die Lösungsmittel im so genannten wasserfreien Zustand ein, d.h. mit einem Wassergehalt im Bereich von 1 ppm bis 0,1 Gew.-%, bestimmbar beispielsweise durch Karl-Fischer-Titration. Elektrochemische Zellen enthalten weiterhin mindestens ein Leitsalz. Geeignete Leitsalze sind insbesondere Lithiumsalze. Beispiele für geeignete Lithiumsalze sind LiPF₆, LiBF₄, LiClO₄, LiAsF₆, LiCF₃SO₃, LiC(CₙF₂ₙ₊₁SO₂)₃, Lithiumimide wie LiN(CₙF₂ₙ₊₁SO₂)₂, wobei n eine ganze Zahl im Bereich von 1 bis 20 ist, LiN(SO₂F)₂, Li₂SiF₆, LiSbF₆, LiAlCl₄, und Salze der allgemeinen Formel (CₙF₂ₙ₊₁SO₂)ₜYLi, wobei t wie folgt definiert ist:
t = 1, wenn Y gewählt wird aus Sauerstoff und Schwefel,
t = 2, wenn Y gewählt wird aus Stickstoff und Phosphor, und
t = 3, wenn Y gewählt wird aus Kohlenstoff und Silizium.

Bevorzugte Leitsalze sind gewählt aus LiC(CF₃SO₂)₃, LiN(CF₃SO₂)₂, LiPF₆, LiBF₄, LiClO₄, und besonders bevorzugt sind LiPF₆ und LiN(CF₃SO₂)₂.

In einer Ausführungsform enthalten elektrochemische Zellen einen oder mehrere Separatoren, durch die die Elektroden mechanisch getrennt sind. Als Separatoren sind Polymerfilme, insbesondere poröse Polymerfilme, geeignet, die gegenüber metallischem Lithium unreaktiv sind. Besonders geeignete Materialien für Separatoren sind Polyolefine, insbesondere filmförmiges poröses Polyethylen und filmförmiges poröses Polypropylen.

Separatoren aus Polyolefin, insbesondere aus Polyethylen oder Polypropylen, können eine Porosität im Bereich von 35 bis 45% haben. Geeignete Porendurchmesser liegen beispielsweise im Bereich von 30 bis 500 nm.

In einer anderen Ausführungsform kann man Separatoren aus mit anorganischen Partikeln gefüllten PET-Vliesen wählen. Derartige Separatoren können eine Porosität im Bereich von 40 bis 55 % aufweisen. Geeignete Porendurchmesser liegen beispielsweise im Bereich von 80 bis 750 nm. Elektrochemische Zellen enthalten weiterhin ein Gehäuse, das beliebige Form haben kann, beispielsweise quaderförmig oder die Form einer zylindrischen Scheibe. In einer Variante wird als Gehäuse eine als Beutel ausgearbeitete Metallfolie eingesetzt. Elektrochemische Zellen liefern eine hohe Spannung und zeichnen sich aus durch eine hohe Energiedichte und gute Stabilität aus. Insbesondere weisen elektrochemische Zellen eine verbesserte Ratenfestigkeit und Zyklenbeständigkeit auf, insbesondere bei höheren Betriebstemperaturen (35-60°C), ohne Nachteile bezüglich der Energiedichte. Elektrochemische Zellen lassen sich miteinander kombinieren, beispielsweise in Reihenschaltung oder in Parallelschaltung. Reihenschaltung ist bevorzugt.

Ein weiterer Gegenstand der vorliegenden Beschreibung ist die Verwendung von elektrochemischen Zellen in Geräten, insbesondere in mobilen Geräten. Beispiele für mobile Geräte sind Fahrzeuge, beispielsweise Automobile, Zweiräder, Flugzeuge oder Wasserfahrzeuge wie Boote oder Schiffe. Andere Beispiele für mobile Geräte sind solche, die man selber bewegt, beispielsweise Computer, insbesondere Laptops, Telefone oder elektrische Handwerkszeuge, beispielsweise aus dem Bereich des Bauens, insbesondere Bohrmaschinen, Akkubohrschrauber oder Akku-Tacker.

Die Verwendung von elektrochemischen Zellen in Geräten bietet den Vorteil einer längeren Laufzeit vor dem Nachladen. Wollte man mit elektrochemischen Zellen mit geringerer Energiedichte eine gleiche Laufzeit verwirklichen, so müsste man ein höheres Gewicht für elektrochemische Zellen in Kauf nehmen.

Die Erfindung wird durch Arbeitsbeispiele weiter erläutert.

Allgemeine Bemerkungen: Unter Litern sind Normliter zu verstehen, wenn nicht anders aufgeführt.

Prozentangaben im Rahmen der vorliegenden Erfindung sind Gew.-%, wenn nicht ausdrücklich anders angegeben.

Die Elementverteilung in den Precursoren wurde durch SEM-EDX bestimmt, englisch: Scanning Electron Microscopy with Energy-Dispersive X-ray spectroscopy.

### I. Herstellung eines Kathodenmaterials

### I.1 Herstellung einer Vorstufe - sphärische Partikel von Übergangsmetallhydroxiden

Die Beispiele und Vergleichsversuche wurden in einem Reaktorsystem mit einem Gesamtvolumen von 8 l durchgeführt, wobei das Reaktorsystem einen Rührkessel mit einem Volumen von 7 l aufwies sowie einen Fest/Flüssig-Trennapparat, der als Kombination von Schrägklärer mit Sedimentierer ausgebildet war, mit einem Volumen von 1 l. Über den Trennapparat konnte während der Reaktion über eine Pumpe Flüssigphase aus dem Rührkessel abgezogen werden, ohne gleichzeitig Feststoff zu entziehen.

Zu Beginn füllte man das Reaktorsystem mit 8 l Ammoniumsulfatlösung. Konzentration 36 g (NH₄)₂SO₄/kg Lösung) und erwärmte auf 45°C.

Der Inhalt des Rührkessels wurde während der Reaktion fortwährend durchmischt, wobei eine mechanische Arbeit von ca. 45 Watt am Inhalt geleistet wurde. Der spezifische Leistungseintrag im Rührkessel beträgt damit etwa 6,4 Watt pro Liter. Im Trennapparat wurde keine Rührleistung eingebracht.

Das Reaktorsystem war ausgestattet mit Schrägblattrührer und Strombrecher. Die Messung der Rührleistung erfolgte über einen elektrischen Motor mit Drehmomentmessung aus Drehzahl und Drehmoment. Weiterhin wies das Reaktorsystem mehrere Dosiereinheiten mit Dosierpumpen auf, sowie eine Elektrode zur pH-Wert-Messung und einen Temperaturfühler. Weiterhin war im Rührkessel ein Füllstandsensor vorhanden, der die Austragspumpe am flüssigkeitsseitigen Anschluss des Trennapparats so regelte, dass der Stand im Rührkessel im Wesentlichen konstant blieb. Feststoff wird vom Trennapparat wieder in den Reaktor zurückgeführt.

Der Gasraum (2 l) im Reaktorsystem wurde während der Durchführung der Fällung mit 40 l/h Stickstoff gespült.

Man setzte die folgenden wässrigen Lösungen ein:
Wässrige Lösung (A): enthielt 5,59 mol NaOH pro kg Lösung und 1,55 mol NH₃ pro kg Lösung, hergestellt aus 25 Gew.-% wässriger NaOH und 25 Gew.-% wässriger Ammoniaklösung.
Wässrige Lösung (B1): enthielt 1,275 mol pro kg Lösung Nickelsulfat und 0,375 mol pro kg Lösung Kobaltsulfat, hergestellt durch Auflösen der entsprechenden Hydratkomplexe in Wasser.
Wässrige Lösung (B2): enthielt 0,579 mol pro kg Lösung Nickelsulfat, 0,347 mol pro kg Lösung Kobaltsulfat und 0,724 mol pro kg Lösung Mangansulfat, hergestellt durch Auflösen der entsprechenden Hydratkomplexe in Wasser.
Wässrige Lösung (C): enthielt 6,25 mol NaOH pro kg Lösung.

Man dosierte wässrige Lösungen (A), (B1) und (B2) über Dosierpumpen; Lösung (C) wurde so dosiert, dass der pH Wert im Rührkessel konstant blieb (pH-Regelung).

### Versuchsdurchführung

Man stellte die oben genannte Ammoniumsulfatlösung durch Zugabe von Lösung (C) auf pH-Wert 11,82 ein, gemessen bei 23°C. Dann dosierte man über Dosierpumpen die Lösungen (B1), (B2) und (A) bei konstantem Massestrom (780/170/516 g/h) in die turbulente Zone der Nähe der Rührblätter des Rührkessels des Reaktorsystems zu. Lösungen (B1) und (B2) wurden vor Eintritt in den Reaktor in einem statischen Mischer vorgemischt. Durch eine Regeleinrichtung hielt man den pH-Wert mittels Zugabe von Lösung (C) konstant bei 11,82 (gemessen bei 23°C). Es bildete sich eine Suspension (Molverhältnis in den Partikeln: Ni:Co:Mn = 70:22:8). Nach 6 Stunden wurden die Flüsse (B1) und (B2) so verändert, dass nach 3 Stunden ein Fluss von 170 g/h bei (B1) und 780 g/h bei (B2) erreicht war (Molverhältnis Ni:Co:Mn = 43:21:36). Die Veränderung der Flüsse erfolgte linear, d.h. mit pro Zeiteinheit konstanter Änderung der Flussraten. Dann wurden die Flüsse (B1) und (B2) für 1 Stunde bei 170 g/h bzw. 780 g/h belassen. Darauf folgten weitere Änderungen der Flussgeschwindigkeiten:
- Über 3 Stunden lineare Änderung auf 780 g/h (B1) und 170 g/h (B2),
- 1 Stunde konstante Flussraten 780 g/h (B1) und 170 g/h (B2),
- Über 3 Stunden lineare Änderung auf 170 g/h (B1) und 780 g/h (B2)
- 3 Stunden konstante Flussraten 170 g/h (B1) und 780 g/h (B2)
- Über 3 Stunden lineare Änderung auf 780 g/h (B1) und 170 g/h (B2)
- 3 Stunden konstante Flussraten 780 g/h (B1) und 170 g/h (B2)
- Über 3 Stunden lineare Änderung auf 170 g/h (B1) und 780 g/h (B2)
- 4 Stunden konstante Flussraten 170 g/h (B1) und 780 g/h (B2)

Die Gesamtlaufzeit betrug 33 Stunden, dann wurde noch 15 min ohne Zulauf nachgerührt. Man erhielt eine Suspension von Übergangsmetallhydroxid, das ein molares Verhältnis Ni:Co:Mn von 57:22:21 aufwies. Die als Reaktorinhalt (Inhalt Rührbehälter und Klärapparat) erhaltene Übergangsmetallhydroxidsuspension wurde über eine Filternutsche filtriert, der Filterkuchen wurde mit Wasser gewaschen und bei 105°C über einen Zeitraum von 18 Stunden getrocknet. Die so erhältlichen erfindungsgemäßen Partikel hatten eine Zusammensetzung von 37 Gew.-% Nickel, 14,6 Gew.-% Kobalt und 12,9 Gew.-% Mangan, jeweils bezogen auf die Partikel, und lagen in teilweise oxidierter Form vor. Die Partikel wurden gesiebt (Maschenweite 32 µm; Grobgut: 0,2%) und die Stampfdichte bestimmt (2,12 kg/l). Eine Teilmenge wurde in Wasser suspendiert und durch Lichtstreuung die Teilchengröße bestimmt (Malvern Mastersizer 2000). Die mittlere Teilchengröße D50 betrug 12,4 µm, bei schmaler Partikeldurchmesserverteilung (D10 = 9,1 µm; D90 = 16,9 µm).

Die erfindungsgemäßen Partikel von Übergangsmetallhydroxid wiesen über den Radius ermittelt, 3 relative Maxima von Nickel - bei 3 relativen Minima von Mangan - auf, die weder am Rand noch im Zentrum des betreffenden Partikels lagen. Die Konzentration von Kobalt war jeweils konstant.

### I.2 Herstellung eines erfindungsgemäßen lithiierten Übergangsmetallmischoxids

Die so erhaltenen Partikel wurden innig mit fein gemahlenem Lithiumcarbonat vermischt, wobei das Molverhältnis von Lithium zur Summe der enthaltenen Übergangsmetalle 1,03 betrug. Eine Teilmenge (40 g) dieses Gemisches wurde in einem Muffelofen in Sauerstoffatmosphäre thermisch behandelt (Maximaltemperatur: 900°C). Es wurden etwa 30 g erfindungsgemäßes Aktivmaterial (AM.1) erhalten. Diese wurde gesiebt (Maschenweite 32 µm; kein Grobgut). Es wurde ein praktisch agglomeratfreies Pulver erhalten, das sich zu erfindungsgemäßen Elektroden verarbeiten ließ.

Vom erfindungsgemäßen Aktivmaterial wurden Teilchengröße (D50), Stampfdichte und Restgehalt an Lithiumcarbonat (Li₂CO₃) bestimmt. Partikeldurchmesser D50: 14,1 µm; Stampfdichte: 2,34 kg/l; Li₂CO₃: 0,23 Gew.-%.

### II. Allgemeine Vorschrift zur Herstellung von erfindungsgemäßen Elektroden und erfindungsgemäßen elektrochemischen Zellen

Eingesetzte Materialien:
Bindemittel (BM.1): Polymer von Vinylidenfluorid, als Lösung, 10 Gew.-% in NMP. Pulver kommerziell erhältlich als Kynar® HSV900 der Fa. Arkema, Inc.

Elektrisch leitfähige kohlenstoffhaltige Materialien:
Kohlenstoff 1: Ruß, BET-Oberfläche von ca. 60 m²/g, kommerziell erhältlich als "Super C65" der Firma Timcal
Kohlenstoff 2: Graphit, kommerziell erhältlich als "SFG6L" der Firma Timcal
Angaben in % beziehen sich auf Gewichtsprozent, wenn nicht ausdrücklich anders angegeben.

Allgemeine Vorschrift am Beispiel von erfindungsgemäßem Aktivmaterial (AM.1):
Man vermischte 0,87 g Kohlenstoff 1, 1,46 g Kohlenstoff 2 und 17,25 g Bindemittel (BM.1) unter Zusatz von 19,5 g N-Methylpyrrolidon (NMP) zu einer Paste vermischt. In einem nächsten Schritt wurden 4,35 g dieser Paste mit 6,0 g erfindungsgemäßem Aktivmaterial (AM.1) vermischt. Man beschichtete eine 30 µm dicke Aluminiumfolie mit der vorstehend beschriebenen Paste (Aktivmaterialbeladung ca. 12 mg/cm²). Nach Trocknung bei 105°C wurden kreisförmige Teile der so beschichteten Aluminiumfolie (Durchmesser 17,5 mm) ausgestanzt. Aus den so erhältlichen Elektroden stellte man erfindungsgemäße elektrochemische Zellen EZ.1 her.

Als Elektrolyt wurde eine 1 mol/l Lösung von LiPF₆ in Ethylencarbonat/Diethylcarbonat (1:1 bezogen auf Massenanteile) eingesetzt, die weiterhin 2 Gew.-% Vinylidencarbonat enthielt. Die Anode bestand aus einer mit Graphit beschichteten Kupferfolie, die durch einen Separator aus Glasfaserpapier von der Kathode getrennt war.

Anschließend wurden die Zellen bei Raumtemperatur zusammengesetzt und bei 60°C zyklisiert. Der Zyklisierungsstrom betrug 75 A/kg, bezogen auf das Aktivmaterial der Kathode, wobei in Abständen von etwa 50 Zyklen auch die Ratenfestigkeit bei 150 Ah/kg, 300 Ah/kg und 450 Ah/kg bestimmt wurde. Als Spannungsbereich wurde 2,8 Volt bis 4,1 Volt gewählt.

Die Ladung wurde bei 75 A/kg durchgeführt, bis die obere Abschaltspannung erreicht war, dann wurde noch 30 Minuten bei konstanter Spannung geladen. Die Entladung wurde stets nur so lang durchgeführt, bis die untere Abschaltspannung erreicht war.

EZ.1: Zelle enthält erfindungsgemäßes Material.
V-EZ.1: Zelle enthält ein Material mit zu erfindungsgemäßem Material vergleichbarer mittlerer Zusammensetzung, aber einer radial sich ohne Extremwert stetig verändernder Übergangsmetallzusammensetzung. Teilchendurchmesser D50: 15,4 µm; Stampfdichte: 2,21 kg/L; Li₂CO₃: 0,24 Gew.-%. Im Übrigen entsprechen die Elektroden und Zellen den erfindungsgemäßen.
V-EZ.2: Zelle enthält ein Material mit zu erfindungsgemäßem Material vergleichbarer mittlerer Zusammensetzung, aber radial im Wesentlichen konstanter Übergangsmetallzusammensetzung. Teilchendurchmesser D50: 13,2 µm; Stampfdichte: 2,22 kg/L; Li₂CO₃: 0,25 Gew.-%. Im Übrigen entsprechen die Elektroden und Zellen den erfindungsgemäßen.

**Tabelle 1: Kapazität (Entladung, A·h/kg) von erfindungsgemäßen elektrochemischen Zellen und Vergleichszellen**

| Zyklus | EZ.1 | V-EZ.1 | V-EZ.2 |
|---|---|---|---|
| *10* | *158* | *160* | *155* |
| 100 | 148 | 148 | 144 |
| 200 | 139 | 137 | 136 |
| 250 | 135 | 132 | 132 |

## Patentansprüche

1. Sphärische Partikel von Übergangsmetallcarbonaten, Übergangsmetallhydroxiden oder Übergangsmetallcarbonathydroxiden, die Kationen von mindestens zwei Übergangsmetallen enthalten, gewählt aus Nickel, Kobalt, Mangan, Titan, Vanadium, Chrom und Eisen, **dadurch gekennzeichnet, dass** die Konzentration von mindestens einem der Übergangsmetallkationen, aufgetragen über den Radius der betreffenden Partikel, mindestens einen relativen Extremwert aufweist, der weder im Zentrum noch am Rand des betreffenden Partikels liegt, wobei Konzentrationsunterschiede im Bereich von ± 1 mol-% oder weniger, bezogen auf relatives Maximum und relatives Minimum, nicht als Extremwerte gelten, und wobei die Partikel über den Durchmesser eine konstante Konzentration an Kobalt aufweisen.

2. Sphärische Partikel nach Anspruch 1, **dadurch gekennzeichnet, dass** die Konzentration der Kationen von mindestens zwei Übergangmetallen, aufgetragen über den Radius der betreffenden Partikel, jeweils mindestens einen relativen Extremwert aufweisen, die weder im Zentrum noch am Rand des betreffenden Partikels liegen.

3. Sphärische Partikel nach Anspruch 1 oder 2, **dadurch gekennzeichnet, dass** die Konzentration der Kationen von mindestens einem der Übergangsmetalle, aufgetragen über den Radius des betreffenden Partikels, mindestens einen Wendepunkt aufweisen.

4. Sphärische Partikel nach einem der Ansprüche 1 bis 3, **dadurch gekennzeichnet, dass** sie Kationen von Nickel, Kobalt und Mangan und gegebenenfalls mindestens einem weiteren Übergangsmetall aufweisen.

5. Sphärische Partikel nach einem der Ansprüche 1 bis 4, **dadurch gekennzeichnet, dass** die Konzentration von Nickel in einem Bereich von 40 bis 80 mol-% liegt, bestimmt über den Radius der betreffenden Partikel.

6. Sphärische Partikel nach einem der Ansprüche 1 bis 5, **dadurch gekennzeichnet, dass** sich innerhalb des Partikels die Konzentration der Kationen von mindestens einem der Übergangsmetalle im Sinne einer stetigen Funktion oder in Schritten von maximal 10 mol-% ändert.

7. Sphärische Partikel nach einem der Ansprüche 1 bis 6, **dadurch gekennzeichnet, dass** sie einen mittleren Durchmesser (D50) im Bereich von 1 bis 30 µm aufweisen.

8. Sphärische Partikel nach einem der Ansprüche 1 bis 7, **dadurch gekennzeichnet, dass** sie über den Durchmesser eine konstante Konzentration an Mangan aufweisen.

9. Verfahren zur Herstellung von sphärischen Partikeln nach einem der Ansprüche 1 bis 8, aufweisend die folgenden Schritte:
(A) Bereitstellen einer wässrigen Lösung von mindestens einem Alkalimetall(hydrogen)carbonat oder mindestens einem Alkalimetallhydroxid und gegebenenfalls mindestens einer Verbindung L, gewählt aus organischen Aminen und Ammoniak,
(B) Bereitstellen von mindestens zwei wässrigen Lösungen (B1) und (B2) von Übergangsmetallsalzen, die insgesamt mindestens zwei Übergangsmetalle enthalten, wobei die wässrigen Lösungen (B1) und (B2) unterschiedliche Molverhältnisse der Übergangsmetalle aufweisen,
(C) Durchführen einer Fällung von gemischten Übergangsmetallcarbonaten, Übergangsmetallhydroxiden oder Übergangsmetallcarbonathydroxiden in einer Rührkesselkaskade von mindestens zwei Rührkesseln oder in einem Satzreaktor, wobei man durch
(C1) Einspeisen von Lösungen (B1) und (B2) in verschiedene Rührkessel der Rührkesselkaskade oder durch
(C2) zeitlich oder mengenmäßig unterschiedliches Einspeisen von Lösungen (B1) und (B2) in den Satzreaktor
Fällungen bei unterschiedlichen Übergangsmetallkonzentrationen herbeiführt,
(D) Abtrennen der so gefällten sphärischen Partikel.

10. Verwendung von sphärischen Partikeln nach einem der Ansprüche 1 bis 8 zur Herstellung von lithiierten Übergangsmetallmischoxiden.

11. Verfahren zur Herstellung von lithiierten Übergangsmetallmischoxiden, **dadurch gekennzeichnet, dass** man sphärische Partikel nach mindestens einem der Ansprüche 1 bis 8 mit mindestens einer Lithiumverbindung, gewählt aus LiOH, Li₂O und Li₂CO₃, vermischt und bei einer Temperatur im Bereich von 600 bis 1000°C miteinander umsetzt.

12. Lithiiertes Übergangsmetallmischoxid in partikulärer Form, das Kationen von mindestens zwei Übergangsmetallen aufweist, gewählt aus Nickel, Kobalt, Mangan, Titan, Vanadium, Chrom und Eisen, **dadurch gekennzeichnet, dass** die Konzentration von mindestens einem der Übergangsmetallkationen, aufgetragen über den Radius des betreffenden Übergangsmetallmischoxids, mindestens einen relativen Extremwert aufweist, der weder im Zentrum noch am Rand des betreffenden Partikels liegt, wobei Konzentrationsunterschiede im Bereich von ± 1 mol-% oder weniger, bezogen auf relatives Maximum und relatives Minimum, nicht als Extremwerte gelten, und wobei die Partikel über den Durchmesser eine konstante Konzentration an Kobalt aufweisen.

13. Lithiiertes Übergangsmetallmischoxid nach Anspruch 12, **dadurch gekennzeichnet, dass** die Konzentration der Kationen von mindestens zwei Übergangmetallen, aufgetragen über den Radius des betreffenden Partikels, jeweils mindestens einen relativen Extremwert aufweisen, die weder im Zentrum noch am Rand des betreffenden Partikels liegen.

14. Lithiiertes Übergangsmetallmischoxid nach Anspruch 12 oder 13, **dadurch gekennzeichnet, dass** die Konzentration der Kationen von mindestens einem der Übergangsmetalle, aufgetragen über den Radius des betreffenden Partikels, mindestens einen Wendepunkt aufweisen.

15. Lithiiertes Übergangsmetallmischoxid nach einem der Ansprüche 12 bis 14, **dadurch gekennzeichnet, dass** es Kationen von Nickel, Kobalt und Mangan und gegebenenfalls mindestens einem weiteren Übergangsmetall in ionischer Form aufweist.

16. Lithiiertes Übergangsmetallmischoxid nach einem der Ansprüche 12 bis 15, **dadurch gekennzeichnet, dass** die Konzentration von Nickel in einem Bereich von 40 bis 80 mol-% liegt, bestimmt über den Radius der betreffenden Partikel.

17. Lithiiertes Übergangsmetallmischoxid nach einem der Ansprüche 12 bis 16, **dadurch gekennzeichnet, dass** sich innerhalb des Partikels die Konzentration der Kationen von mindestens einem der Übergangsmetalle im Sinne einer stetigen Funktion oder in Schritten von maximal 10 mol-% ändert.

18. Verwendung von lithiiertem Übergangsmetallmischoxid nach einem der Ansprüche 12 bis 17 zur Herstellung von Kathoden für Lithium-Ionen-Batterien.

## Claims

1. Spherical particles of transition metal carbonates, transition metal hydroxides or transition metal carbonate hydroxides comprising cations of at least two transition metals selected from nickel, cobalt, manganese, titanium, vanadium, chromium and iron, wherein the concentration of at least one of the transition metal cations, plotted against the radius of the particles in question, has at least one relative extreme value which is neither in the center nor at the edge of the particle in question, where concentration differences in the range of ± 1 mol% or less, based on relative maximum and relative minum, are not considered as extreme values, and where the particles have a constant concentration of cobalt over the diameter.

2. Spherical particles according to claim 1, wherein the concentration of the cations of at least two transition metals, plotted against the radius of the particles in question, has at least one relative extreme value in each case which is neither in the center nor at the edge of the particle in question.

3. Spherical particles according to claim 1 or 2, wherein the concentration of the cations of at least one of the transition metals, plotted against the radius of the particle in question, has at least one turning point.

4. Spherical particles according to any of claims 1 to 3, which include cations of nickel, cobalt and manganese and optionally at least one further transition metal.

5. Spherical particles according to any of claims 1 to 4, wherein the concentration of nickel is within a range from 40 to 80 mol%, determine over the radius of the particles in question.

6. Spherical particles according to any of claims 1 to 5, wherein the concentration of the cations of at least one of the transition metals changes within the particle in the manner of a constant function or in steps of not more than 10 mol%.

7. Spherical particles according to any of claims 1 to 6, which have a median diameter (D50) in the range from 1 to 30 µm.

8. Spherical particles according to any of claims 1 to 7, which have a constant concentration of manganese over the diameter.

9. A process for producing spherical particles according to any of claims 1 to 8, having the following steps:
(A) providing an aqueous solution of at least one alkali metal (hydrogen)carbonate or at least one alkali metal hydroxide and optionally at least one compound L, selected from organic amines and ammonia,
(B) providing at least two aqueous solutions (B1) and (B2) of transition metal salts which comprise at least two transition metals overall, the aqueous solutions (B1) and (B2) having different molar ratios of the transition metals,
(C) performing a precipitation of mixed transition metal carbonates, transition metal hydroxides or transition metal carbonate hydroxides in a stirred tank cascade of at least two stirred tanks or in a batch reactor, bringing about precipitations at different transition metal concentrations by
(C1) feeding solutions (B1) and (B2) into various stirred tanks of the stirred tank cascade or by
(C2) feeding solutions (B1) and (B2) into the batch reactor at different times or in different amounts,
(D) removing the spherical particles thus precipitated.

10. The use of spherical particles according to any of claims 1 to 8 for production of lithiated mixed transition metal oxides.

11. A process for producing lithiated mixed transition metal oxides, which comprises mixing spherical particles according to at least one of claims 1 to 8 with at least one lithium compound selected from LiOH, Li₂O and Li₂CO₃, and reacting them with one another at a temperature in the range from 600 to 1000°C.

12. A lithiated mixed transition metal oxide in particulate form having cations of at least two transition metals selected from nickel, cobalt, manganese, titanium, vanadium, chromium and iron, wherein the concentration of at least one of the transition metal cations, plotted against the radius of the mixed transition metal oxide in question, has at least one relative extreme value which is neither in the center nor at the edge of the particle in question, where concentration differences in the range of ± 1 mol% or less, based on relative maximum and relative minum, are not considered as extreme values, and where the particles have a constant concentration of cobalt over the diameter.

13. The lithiated mixed transition metal oxide according to claim 12, wherein the concentration of the cations of at least two transition metals plotted against the radius of the particle in question have at least one relative extreme value in each case which is neither in the center nor at the edge of the particle in question.

14. The lithiated mixed transition metal oxide according to claim 12 or 13, wherein the concentration of the cations of at least one of the transition metals plotted against the radius of the particle in question has at least one turning point.

15. The lithiated mixed transition metal oxide according to any of claims 12 to 14, which includes cations of nickel, cobalt and manganese and optionally at least one further transition metal in ionic form.

16. The lithiated mixed transition metal oxide according to any of claims 12 to 15, wherein the concentration of nickel is within a range from 40 to 80 mol%, determined over the radius of the particles in question.

17. The lithiated mixed transition metal oxide according to any of claims 12 to 16, wherein the concentration of the cations of at least one of the transition metals changes within the particle in the manner of a constant function or in steps of not more than 10 mol%.

18. The use of lithiated mixed transition metal oxide according to any of claims 12 to 17 for production of cathodes for lithium ion batteries.

## Revendications

1. Particules sphériques de carbonates de métaux de transition, d'hydroxydes de métaux de transition ou de carbonates-hydroxydes de métaux de transition, qui contiennent des cations d'au moins deux métaux de transition, choisis parmi le nickel, le cobalt, le manganèse, le titane, le vanadium, le chrome et le fer, **caractérisées en ce que** la concentration d'au moins un des cations de métaux de transition, rapportée au rayon de la particule en question, présente au moins une valeur extrême relative, qui ne se trouve ni au centre, ni au bord de la particule en question, des différences de concentration dans la plage de ±1 % en moles ou moins, par rapport au maximum relatif et au minimum relatif, n'étant pas considérées comme des valeurs extrêmes, et les particules présentant sur le diamètre une concentration constante de cobalt.

2. Particules sphériques selon la revendication 1, **caractérisées en ce que** la concentration des cations d'au moins deux métaux de transition, rapportée au rayon de la particule en question, présente à chaque fois au moins une valeur extrême relative, qui ne se trouve ni au centre, ni au bord de la particule en question.

3. Particules sphériques selon la revendication 1 ou 2, **caractérisées en ce que** la concentration des cations d'au moins un des métaux de transition, rapportée au rayon de la particule en question, présente au moins un point d'inflexion.

4. Particules sphériques selon l'une quelconque des revendications 1 à 3, **caractérisées en ce qu'**elles comprennent des cations de nickel, de cobalt et de manganèse et éventuellement d'au moins un autre métal de transition.

5. Particules sphériques selon l'une quelconque des revendications 1 à 4, **caractérisées en ce que** la concentration de nickel se situe dans une plage allant de 40 à 80 % en moles, déterminée sur le rayon des particules en question.

6. Particules sphériques selon l'une quelconque des revendications 1 à 5, **caractérisées en ce que** la concentration des cations d'au moins un des métaux de transition se modifie dans la particule au sens d'une fonction continue ou par étapes d'au plus 10 % en moles.

7. Particules sphériques selon l'une quelconque des revendications 1 à 6, **caractérisées en ce qu'**elles présentent un diamètre moyen (D50) dans la plage allant de 1 à 30 µm.

8. Particules sphériques selon l'une quelconque des revendications 1 à 7, **caractérisées en ce qu'**elles présentent sur le diamètre une concentration constante de manganèse.

9. Procédé de fabrication de particules sphériques selon l'une quelconque des revendications 1 à 8, comprenant les étapes suivantes :
(A) la préparation d'une solution aqueuse d'au moins un (hydrogéno)carbonate de métal alcalin ou d'au moins un hydroxyde de métal alcalin et éventuellement d'au moins un composé L, choisi parmi les amines organiques et l'ammoniac,
(B) la préparation d'au moins deux solutions aqueuses (B1) et (B2) de sels de métaux de transition, qui contiennent au total au moins deux métaux de transition, les solutions aqueuses (B1) et (B2) présentant différents rapports molaires entre les métaux de transition,
(C) la réalisation d'une précipitation de carbonates de métaux de transition, hydroxydes de métaux de transition ou carbonates-hydroxydes de métaux de transition mélangés dans une cascade de cuves agitées d'au moins deux cuves agitées ou dans un réacteur discontinu, des précipitations à différentes concentrations de métaux de transition étant provoquées par
(C1) introduction de solutions (B1) et (B2) dans différentes cuves agitées de la cascade de cuves agitées ou par
(C2) introduction différente dans le temps ou en termes de quantités de solutions (B1) et (B2) dans le réacteur discontinu,
(D) la séparation des particules sphériques ainsi précipitées.

10. Utilisation de particules sphériques selon l'une quelconque des revendications 1 à 8 pour la fabrication d'oxydes mixtes de métaux de transition lithiés.

11. Procédé de fabrication d'oxydes mixtes de métaux de transition lithiés, **caractérisé en ce que** des particules sphériques selon au moins l'une quelconque des revendications 1 à 8 sont mélangées avec au moins un composé de lithium, choisi parmi LiOH, Li₂O et Li₂CO₃, et mises en réaction les unes avec les autres à une température dans la plage allant de 600 à 1 000 °C.

12. Oxyde mixte de métaux de transition lithié sous forme particulaire, qui comprend des cations d'au moins deux métaux de transition, choisis parmi le nickel, le cobalt, le manganèse, le titane, le vanadium, le chrome et le fer, **caractérisé en ce que** la concentration d'au moins un des cations de métaux de transition, rapportée au rayon de l'oxyde mixte de métaux de transition en question, présente au moins une valeur extrême relative, qui ne se trouve ni au centre, ni au bord de la particule en question, des différences de concentration dans la plage de ±1 % en moles ou moins, par rapport au maximum relatif et au minimum relatif, n'étant pas considérées comme des valeurs extrêmes, et les particules présentant sur le diamètre une concentration constante de cobalt.

13. Oxyde mixte de métaux de transition lithié selon la revendication 12, **caractérisé en ce que** la concentration des cations d'au moins deux métaux de transition, rapportée au rayon de la particule en question, présente à chaque fois au moins une valeur extrême relative, qui ne se trouve ni au centre, ni au bord de la particule en question.

14. Oxyde mixte de métaux de transition lithié selon la revendication 12 ou 13, **caractérisé en ce que** la concentration des cations d'au moins un des métaux de transition, rapportée au rayon de la particule en question, présente au moins un point d'inflexion.

15. Oxyde mixte de métaux de transition lithié selon l'une quelconque des revendications 12 à 14, **caractérisé en ce qu'**il comprend des cations de nickel, de cobalt et de manganèse et éventuellement d'au moins un autre métal de transition sous forme ionique.

16. Oxyde mixte de métaux de transition lithié selon l'une quelconque des revendications 12 à 15, **caractérisé en ce que** la concentration de nickel se situe dans une plage allant de 40 à 80 % en moles, déterminée sur le rayon des particules en question.

17. Oxyde mixte de métaux de transition lithié selon l'une quelconque des revendications 12 à 16, **caractérisé en ce que** la concentration des cations d'au moins un des métaux de transition se modifie dans la particule au sens d'une fonction continue ou par étapes d'au plus 10 % en moles.

18. Utilisation d'un oxyde mixte de métaux de transition lithié selon l'une quelconque des revendications 12 à 17 pour la fabrication de cathodes pour batteries lithium-ion.
